# EUROPÄISCHE PATENTANMELDUNG

(11) **EP 3 070 815 A1**
(43) Veröffentlichungstag der Anmeldung: **21.09.2016**
(21) Anmeldenummer: 15159859.6
(22) Anmeldetag: 19.03.2015
(51) Int. Cl.: H02K 1/20, H02K 9/19, H02K 9/22, H02K 5/18

(54) **Stator mit thermischer Anbindung von Kühlrohren**

(71) Anmelder: Siemens Aktiengesellschaft, 80333 München (DE)
(72) Erfinder: Weiß, Sebastian, 90522 Oberasbach (DE)

(57) **Zusammenfassung**

Die Erfindung betrifft einen Stator (2) einer flüssigkeitsgekühlten elektrischen Maschine (1), der ein in Nuten (8) des Stators (2) positionierbares Wicklungssystem (7) aufweist, wobei auf der den Nuten (8) abgewandten Seite des Stators (2) - also der Oberfläche (9) des Stators (2) - Ausnehmungen (12) vorgesehen sind, in denen jeweils zumindest ein Kühlelemente (11) angeordnet ist, wobei auf der der Oberfläche (9) zugewandten, offenen Seite der Ausnehmungen (12) ein thermisch leitfähiges Einlegeteil (16) vorgesehen ist, das mit dem Kühlelement (11) und den Seitenflächen (17) der Ausnehmung (12) in wärmeleitendem Kontakt steht, insbesondere einen Formschluss, einen Kraftschluss oder einen Stoffschluss bildet.

## Beschreibung

Die Erfindung betrifft einen Stator einer flüssigkeitsgekühlten elektrischen Maschine, der ein in Nuten des Stators positioniertes Wicklungssystem aufweist, wobei auf der den Nuten abgewandten Seite des Stators, also der Oberfläche des Stators, Ausnehmungen vorgesehen sind, in den Kühlelemente angeordnet sind.

Aus dynamoelektrischen Maschinen muss im Betrieb dieser Maschinen die Verlustwärme abgeführt werden. Die Verlustwärme entsteht meistens durch Wirbelstromverluste, Kupferverluste, Eisenverluste etc. die die Maschine in unzulässiger Weise erwärmen.

Bei einfacheren elektrischen Maschinen wird dabei eine Luftkühlung vorgesehen, in dem ein Luftstrom vorgegebene Wärmequellen umströmt und somit die Abwärme abführt. Aufgrund der geringen Wärmekapazität von Luft sind jedoch bei hochausgenutzten elektrischen Maschinen flüssigkeitsgekühlte Maschinen vorzusehen, da die Wärmekapazität beispielsweise von Wasser wesentlich höher ist als die von Luft. Dabei muss jedoch das Wasser in Kühlrohren geführt werden, die thermisch an das Blechpaket des Stators anzubinden sind. Bei der thermischen Anbindung der Kühlrohre ist ein minimaler thermischer Widerstand anzustreben, da ansonsten die Kühlleistung dieses Kühlsystems wenig effizient ist.

So ist beispielsweise aus der WO 2012/159660 A1 eine dynamoelektrische Maschine mit einem Statorpaket bekannt, in das Kühlrohre eingelegt sind. Dabei wird der thermische Kontakt durch Einpressen der Rohre in die Nuten oder durch eine Vergussmasse, welche die Lufträume zwischen Kühlrohr und Statorpaket ausfüllt, hergestellt. Diese Ausführung nutzt lediglich nur die halbe theoretische Kühlleistung der Kühlrohre, da diese Kühlrohre nur mit ihrem halben Umfang an das Statorblechpaket thermisch angebunden sind.

Dieses Problem wird versucht zu beheben, in dem möglichst viele Rohre das Statorblechpaket kühlen. Dies führt jedoch zu weiteren technologischen Fragestellungen, wie minimaler Biegeradius der Rohre aufgrund der Umlenkung außerhalb des Blechpakets, der maximale Druckverlust in den Kühlrohren, die gleichmäßige Verteilung des Kühlmediums auf die Rohre und letztlich den zur Verfügung stehenden Bauraum. Die Berücksichtigung dieser Faktoren und deren technische Umsetzung treibt die Kosten einer derartigen elektrischen Maschine nach oben.

Ausgehend davon liegt der Erfindung die Aufgabe zugrunde, einen Stator einer dynamoelektrischen Maschine zu schaffen, der eine vergleichsweise bessere und einfachere thermische Anbindung seines Kühlsystems aufweist, um damit eine hocheffiziente dynamoelektrische Maschine bereitzustellen.

Die Lösung der gestellten Aufgabe gelingt durch einen Stator einer flüssigkeitsgekühlten elektrischen Maschine, der ein in Nuten des Stators positionierbares Wicklungssystem aufweist, wobei auf der den Nuten abgewandten Seite des Stators - also der Oberfläche des Stators - Ausnehmungen vorgesehen sind, in denen jeweils zumindest ein Kühlelemente angeordnet ist, wobei auf der der Oberfläche zugewandten, offenen Seite der Ausnehmungen ein thermisch leitfähiges Einlegeteil vorgesehen ist, das mit dem Kühlelement und den Seitenflächen der Ausnehmung in wärmeleitendem Kontakt steht, insbesondere einen Formschluss, einen Kraftschluss oder einen Stoffschluss bildet.

Die Lösung der gestellten Aufgabe gelingt ebenso durch eine elektrische Maschine mit einem Stator wobei die Kühlelemente des Stators axial über den Wickelkopf eines Wicklungssystems geführt sind.

Erfindungsgemäß werden nun in die Ausnehmung Einlegeteile aus gut wärmeleitendem Material, wie beispielsweise Aluminium oder Kupfer, eingesetzt. Diese Einlegeteile werden über die Oberfläche des Stators in die Ausnehmung eingesetzt, in der sich bereits ein Kühlelement befindet. Mit diesem stellt das Einlegeteil mittels Formschluss, Kraftschluss oder Stoffschluss bezüglich der verbleibenden Oberfläche des Kühlelements als auch den Seitenwänden der Ausnehmung einen vergleichsweise gut wärmeleitenden Kontakt her, so dass ein geringer thermischer Übergang sowohl von Kühlelement auf das Einlegeteil als auch von den Einlegeteilen zu den Seitenwänden der Ausnehmung erfolgt. Es liegt somit eine optimale thermische Anbindung vor, indem das Kühlelement über seine gesamte Oberfläche Abwärme aus dem Blechpaket des Stators aufnehmen kann.

Vorteilhafterweise entspricht die Länge der Einlegeteile einer Ausnehmung der axialen Länge des Blechpakets des Stators. Die Einlegeteile sind so geformt, dass sie also gut wärmeleitend an Kühlelement und gleichzeitig Seitenwände der Ausnehmung anliegen. Die radiale Höhe dieses Einlegeteils wird mit einer technisch sinnvollen Materialstärke ausgeführt, um einen möglichst guten thermischen Übergang zwischen Kühlelement und den Seitenwänden der Ausnehmung zu erhalten.

Das durch die verschiedenen Wärmequellen aufgeheizte Blechpaket des Stators führt die Wärme über die Kühlelemente ab. Dabei steht jetzt nicht nur der direkte Kontakt von Blechpaket auf das Kühlelement zur Verfügung sondern erfindungsgemäß wird nunmehr auch Wärme vom Blechpaket über das Einlegeteil zum Kühlelement geführt. D.h. es findet auch ein Wärmeübergang vom Blechpaket über die Seitenwände an das Einlegeteil und von dort an das Kühlelement statt und kann somit von der das Kühlelement durchströmenden Flüssigkeit abgeführt werden.

Die Einlegeteile werden nach den Kühlelementen in die Ausnehmung eingelegt und zusammen mit dem Kühlelement, insbesondere Kühlrohr in die Ausnehmung eingepresst oder vergossen.

Die Einlegeteile aus Aluminium oder Kupfer eignen sich besonders zum Einpressen, da deren vergleichsweise guten Duktilitätseigenschaften von Vorteil sind, indem sich das Material beim Pressen in Richtung Grund der Ausnehmung sich optimal an die Oberfläche des Kühlelements anschmiegt und ebenso seitlich in Richtung Seitenwand der Ausnehmung fließt, wodurch dort eventuelle unerwünschte Luftspalte geschlossen werden.

Um auch bei thermischer Ausdehnung der Ausnehmung ein Herausfallen des Einlegeteils zu vermeiden, wird in einer vorteilhaften Ausgestaltung Sperrnuten in den Seitenwänden der Ausnehmung vorgesehen, in die das eingepresste Material des Einlegeteils beim Einpressen ausweichen kann und dadurch eine formschlüssige Verbindung zu den Seitenwänden herstellt.

Alternativ oder ergänzend dazu kann auch ein elastisches Sperrstück als Sicherung zusätzlich eingesetzt werden, welches sich zwischen zwei Sperrnuten, die sich an den Seitenwänden der Ausnehmung befinden, eingeklemmt wird. Das Sperrelement wirkt auch als Anpressfeder für das Einlegeteil und das Kühlelement in der Ausnehmung.

Alternative zum Einlegeteil ist auch eine gut wärmeleitfähige Vergussmasse, z.B. Metallpulver in Harz in die Ausnehmung eingebracht worden. Um dieses Vergusselement gegen Ablösen und Herausfallen zu sichern, sind auch hier vorteilhafterweise elastische Sperrstücke vorzusehen.

Die Ausnehmungen an der den Nuten des Stators abgewandten Seite des Blechpakets des Stators, also an der Oberfläche des Stators, können sowohl axial ausgerichtet sein, also im wesentlichen achsparallel verlaufen, als auch sich spiralförmig um die Achse winden, ebenso ist ein mäandernder Verlauf dieser Ausnehmungen vorstellbar. Bei im Wesentlichen axial verlaufenden Ausnehmungen sind starre Kühlelemente, also Kühlrohre einzusetzen, während bei einem mäandernden Verlauf über die Oberfläche des Stators oder bei einem spiralförmigen Verlauf der Ausnehmungen ebenso biegsame Wellschläuche einzusetzen sind.

Die radiale Höhe dieser Einlegeteile wird mit einer technisch sinnvollen Materialstärke ausgeführt, um einen möglichst guten thermischen Übergang zwischen Kühlelement und den Seitenwänden der Ausnehmung zu erhalten.

Dabei sollte zumindest die radiale Höhe der Einlegeteile im Bereich der Seitenwände der Ausnehmung - also den Kontaktflächen mit dem Blechpaket - einem Drittel der radialen Tiefe der Ausnehmung entsprechen. Je größer die Kontaktfläche, umso besser gestaltet sich der Wärmeübergang vom Blechpaket über das Einlegeteil zum Kühlelement. Deshalb ist es vorteilhaft als radiale Höhe der Einlegeteile 50 bis 80% der radialen Tiefe der Ausnehmung zu wählen. Diese Auswahl ist auch abhängig von der radialen Höhe der Kühlelemente. Die radiale Höhe der Einlegeteile sollte demnach so gewählt werden, dass sie nicht über die Kontur der Oberfläche des Stators ragen.

In einer alternativen Ausführungsform sind die Einlegeteile explizit so ausgeformt, das sie radial über die Oberfläche ragen und somit zusätzlich Kühlrippen bilden. Sodass neben der Flüssigkeitskühlung auch eine effizientere Luftkühlung stattfindet. Auf die oben beschriebenen Sperrstücke muss dann allerdings in dieser Form verzichtet werden. Eine zusätzliche Fixierung dieser Einlegeteile kann dann allerdings z.B. über Bandagen erfolgen.

Eine mit einem derartigen Kühlsystem versehene dynamoelektrische Maschine gewährleistet nunmehr einen optimalen Wärmeübergang auf die Kühlflüssigkeit, so dass die Effizienz der Maschine gesteigert wird.

Die Erfindung sowie weitere vorteilhafte Ausgestaltungen der Erfindung werden anhand einiger Ausführungsbeispiele näher erläutert. Dabei zeigen:
- FIG 1: einen Teillängsschnitt einer elektrischen Maschine,
- FIG 2: einen Teilquerschnitt einer elektrischen Maschine,
- FIG 3: einen weiteren Teillängsschnitt eines Stators,
- FIG 4 bis 11: Detaildarstellungen der Ausnehmung mit Kühlelement.

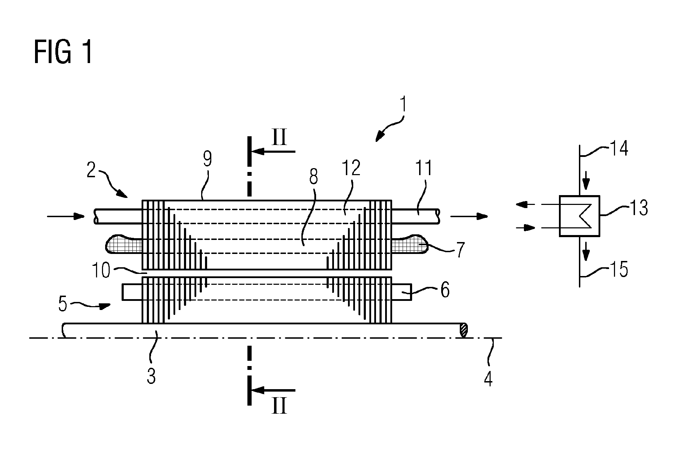

FIG 1 zeigt in einem Teillängsschnitt eine dynamoelektrische Maschine 1, die einen Stator 2 aufweist, der geblecht ausgeführt ist.

Der Stator 2 weist in Nuten 8, die einem Luftspalt 10 der dynamoelektrischen Maschine 1 zugewandt sind ein Wicklungssystem 7 auf, das an den Stirnseiten des Stators 2 Wickelköpfe ausbildet. Auf der dem Luftspalt 10 abgewandten Seite des Stators 2 befinden sich Ausnehmungen 12 an der Oberfläche 9 des Stators 2. In den Ausnehmungen 12 befinden sich Kühlelemente 11, die durch zusätzliche Einlegeteile 16 thermisch an das Blechpaket des Stators 2 angebunden sind. Radial in Richtung einer Achse 4 befindet sich vom Stator 2 aus gesehen, ein Rotor 5, der in diesem Fall ein Kurzschlusskäfig 6 aufweist und insofern die dynamoelektrische Maschine 1 als Asynchronmaschine mit Käfigläufer bezeichnet wird.

Die Erfindung ist jedoch nicht auf Asynchronmaschinen beschränkt, vielmehr kann der dem erfindungsgemäßen Stator 2 zugrundeliegende Gedanke überall dort eingesetzt werden, wo in einfacher Art und Weise hocheffiziente Kühlsysteme für dynamoelektrische Maschinen bereitgestellt werden sollen.

Der Rotor 5 ist mit einer Welle 3 über an sich bekannte Mittel wie Passfederverbindungen oder Keilwellenverbindungen drehfest verbunden und ist um eine Drehachse 4 drehbar gelagert.

Im Betrieb der dynamoelektrischen Maschine 1 fällt nunmehr u.a. aufgrund der Kupferverluste des Wicklungssystems 7, aufgrund Hysterese- und Eisenverlusten eine Wärmemenge an, die zur Steigerung der Effizienz der dynamoelektrischen Maschine 1 abzuführen ist. Dies gelingt unter anderem durch die Kühlelemente, die in der hier bevorzugten Ausführung vorzugsweise als Kühlrohre 11 ausgebildet sind.

Die Kühlrohre 11 werden mit Wasser durchströmt, wobei die Kühlrohre 11 des Stators 2 an einen Wärmetauscher 13 angeschlossen sind, der mittels Luftein- und -auslässen 14, 15 die Kühlflüssigkeit rückkühlt. Der Wärmetauscher 13 selbst kann dabei innerhalb der dynamoelektrischen Maschine 1 respektive innerhalb eines Gehäuses der dynamoelektrischen Maschine 1, an der elektrischen Maschine 1 oder auch entfernt davon aufgestellt sein.

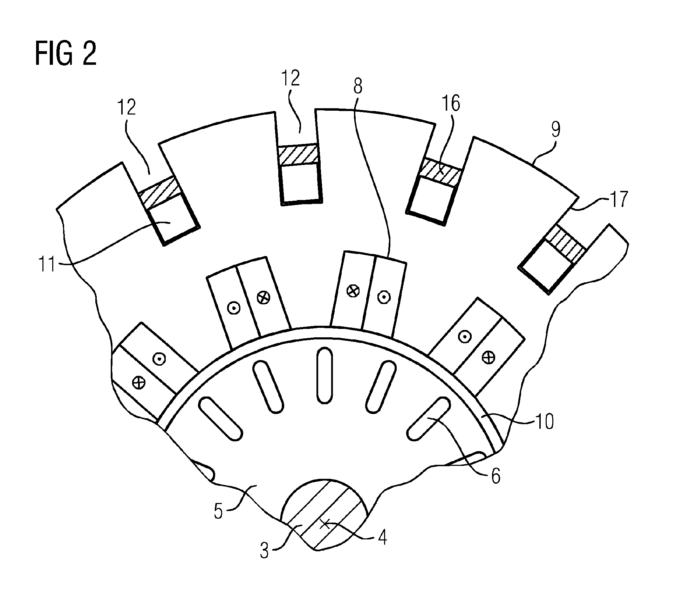

FIG 2 zeigt in einem Schnitt einen Teilquerschnitt der dynamoelektrischen Maschine 1, wobei der Rotor 5 und die Drehachse 4 um den sich der Rotor 5 dreht, gezeigt sind. Innerhalb des Rotors 5 ist ein Teil des Käfigs dargestellt, in diesem Fall sind es die Käfigstäbe 6.

Radial nach außen schließt sich der Luftspalt 10 und daran die Nuten 8 an, in denen dort beispielhaft eine Zahnspulenwicklung dargestellt ist. Radial nach weiter außen befinden sich, von der Oberfläche des Stators 2 radial nach innen gerichtet, Ausnehmungen, in denen die Kühlelemente dargestellt sind. Die Kühlelemente sind in diesem Ausführungsbeispiel mit rechteckigem Querschnitt dargestellt, sind aber ebenso rund bzw. rundlich, tropfenförmig etc. auszuführbar.

Radial an die Kühlelemente 11 schließt sich nach außen das Einlegeteil 16 an, das einen thermischen bzw. wärmeleitenden Kontakt zwischen den Seitenflächen 17 der Ausnehmungen 12 und einem Teil der Oberfläche der Kühlelemente 11 herstellt. Somit ist eine gute thermische Anbindung an der gesamten Außenfläche des Kühlelements 11 gewährleistet.

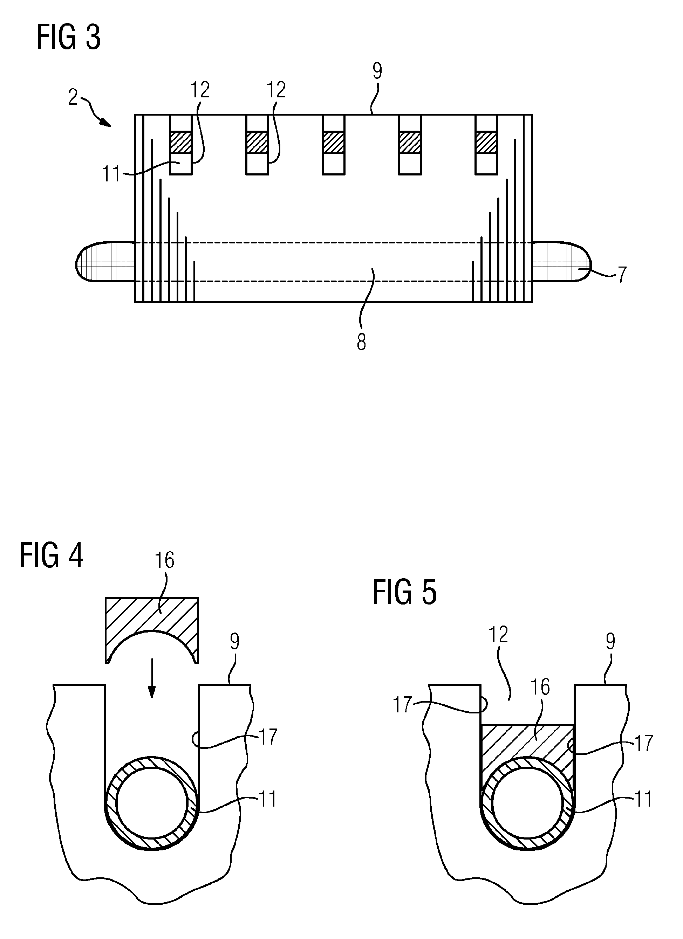

In FIG 1 und FIG 2 sind die Kühlelemente im Wesentlichen in axial verlaufenden Ausnehmungen 12 angeordnet. Demgegenüber zeigt FIG 3 einen prinzipiellen Verlauf der Kühlelemente 11 in Umfangsrichtung des Stators 2. Dabei sind die Ausnehmungen 12 an der Oberfläche des Stators 2 mäandernd oder spiralförmig ausgeführt.

FIG 4 und FIG 5 zeigen im Prinzip den Einbau eines Kühlelements 11 in eine Ausnehmung 12, wobei ein Einlegeteil 16 entweder separat zu dem Kühlelement 11 oder gleichzeitig mit dem Kühlelement 11 in die Ausnehmung 12 kraftschlüssig eingesetzt bzw. eingepresst wird. Vor allem bei Einlegeteilen 16 aus Aluminium oder Kupfer und deren guten Duktilitätseigenschaften wird das Material beim Pressen in Richtung Grund der Ausnehmung 12 optimal an die Oberfläche des Kühlelements 11 angeschmiegt und seitlich an die Seitenwände der Ausnehmung 12 thermisch angebunden.

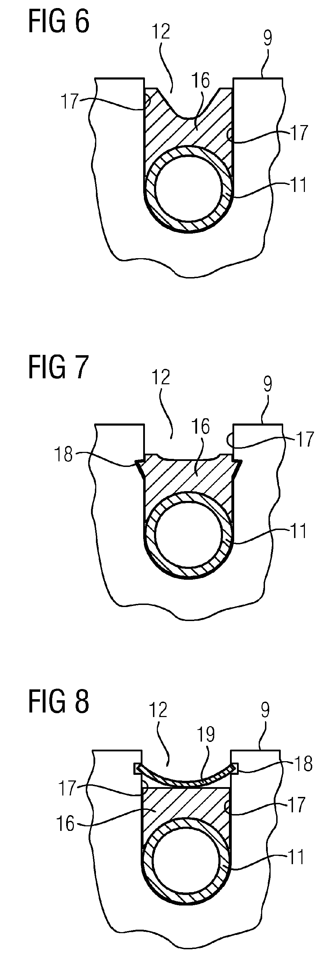

FIG 6 zeigt in einer weiteren Ausführungsform ein Einlegeteil 16, das, um die thermischen Übergänge zu verbessern bzw. zu vergrößern, an den Seitenwänden 17 in Richtung Oberfläche 9 des Stators gezogen ist.

Das thermisch leitfähige Einlegeteil 16 gemäß FIG 5 und FIG 6 bildet insbesondere mit den Seitenflächen der Ausnehmung 12 einen Kraftschluss.

FIG 7 zeigt in einer vorteilhaften Ausgestaltung zusätzlich Sperrnuten in den Seitenflächen 17 der Ausnehmung 12, die eine zusätzliche Fixierung der Einlegeteile 16 beim Einpressen in die Ausnehmung 12 gewährleisten.

Die Sperrnuten verlaufen idealerweise über die gesamte axiale Länge des Statorblechpakets, es kann aber durchaus ausreichend sein, diese Sperrnuten nur abschnittsweise im axialen Verlauf der Ausnehmung 12 vorzusehen.

Das thermisch leitfähige Einlegeteil 16 gemäß FIG 7 bildet insbesondere mit den Seitenflächen der Ausnehmung 12 einen Formschluss.

Eine zusätzliche Fixierung der Einlegeteile 16 kann durch ein Sperrelement 19 gewährleistet werden, das sich in Sperrnuten 18 in den Seitenflächen 17 der Ausnehmung 12 befindet und so das Einlegeteil 16 zusätzlich auf die Oberfläche des Kühlelements 11 presst, wie dies FIG 8 zu entnehmen ist. Es ist dabei z.B. bei einer thermischen Ausdehnung von Kühlelement 11 und Einlegeteil 16 eine radial gerichtete Gegenkraft vorhanden, die weiterhin eine gute thermische Anbindung gewährleistet. Je nach erforderlicher Anpresskraft kann es ausreichend sein, wenn die Sperrelemente 19 in axialer Richtung einer Ausnehmung 12 betrachtet nur abschnittsweise vorgesehen sind.

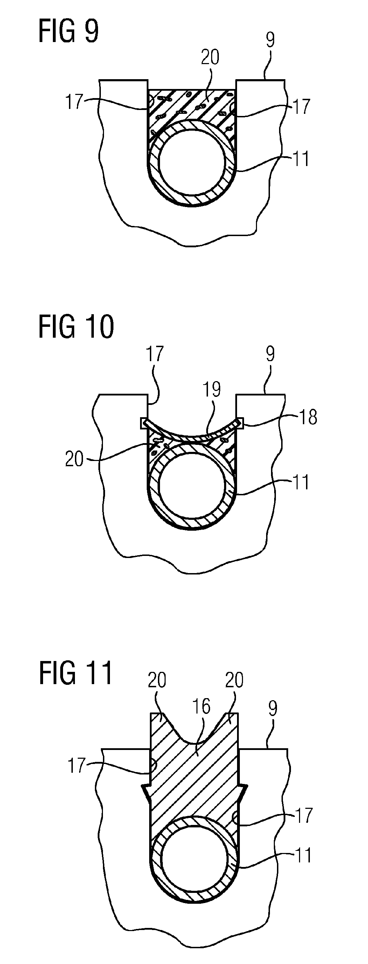

In einer weiteren Ausführung gemäß FIG 9 bildet das Einlegeteil 16 eine Vergussmasse 20, die ebenfalls eine gute thermische Anbindung an die Seitenflächen 17 der Ausnehmung 12 gewährleistet. Diese Vergussmasse 20 weist eine Mischung von Metallteilchen in Harz auf.

Um auch dort eine zusätzliche Anpressung zu erhalten, wird gemäß FIG 10 dort mittels eines Sperrelements 19 diese Vergussmasse 20 auf die Oberfläche des Kühlelements 11 gedrückt.

Das thermisch leitfähige Einlegeteil 16 gemäß FIG 9 bildet insbesondere mit den Seitenflächen der Ausnehmung 12 einen Stoffschluss.

In einer weiteren Ausgestaltung gemäß FIG 11 reichen die Einlegeteile 16 über die Oberfläche 9 des Stators 2. Sie weisen damit eine radiale Höhe auf, die die Einlegeteile 16 über der Oberfläche 9 Rippen 20 bilden lässt, die zur zusätzlichen Luftkühlung des Stators 2 angezogen werden können. Der Wärmefluss aus dem Blechpaket des Stators 2 fließt somit im Betrieb der dynamoelektrischen Maschine 1 direkt und über die Einlegteile 16 in die Kühlelemente 11 sowie über die Oberfläche 9 und die Einlegeteile 16 sowie deren Rippen 20 an die umgebende Luft.

Derartige dynamoelektrische Maschinen werden vor allem für hocheffiziente Einsatzgebiete wie z.B. Antriebe von Fahrzeugen, Industriemotoren und im Werkzeugmaschinenbereich eingesetzt.

## Patentansprüche

1. Stator (2) einer flüssigkeitsgekühlten elektrischen Maschine (1), der ein in Nuten (8) des Stators (2) positionierbares Wicklungssystem (7) aufweist, wobei auf der den Nuten (8) abgewandten Seite des Stators (2) - also der Oberfläche (9) des Stators (2) - Ausnehmungen (12) vorgesehen sind, in denen jeweils zumindest ein Kühlelemente (11) angeordnet ist, wobei auf der der Oberfläche (9) zugewandten, offenen Seite der Ausnehmungen (12) ein thermisch leitfähiges Einlegeteil (16) vorgesehen ist, das mit dem Kühlelement (11) und den Seitenflächen (17) der Ausnehmung (12) in wärmeleitendem Kontakt steht, insbesondere einen Formschluss, einen Kraftschluss oder einen Stoffschluss bildet.

2. Stator (2) nach Anspruch 1, **dadurch gekennzeichnet, dass** das Einlegeteil (16) an den Seitenflächen (17) der Ausnehmungen (12) mittels Sperrnuten (18) und/oder Sperrelemente (19) zumindest abschnittsweise fixiert ist.

3. Stator (2) nach Anspruch 1 oder 2, **dadurch gekennzeichnet, dass** das Kühlelement (11) axial oder in Umfangsrichtung des Stators (2) angeordnet ist.

4. Stator (2) nach einem der vorhergehenden Ansprüche, **dadurch gekennzeichnet, dass** das Kühlelement (11) als Kühlrohr ausgebildet ist.

5. Dynamoelektrische Maschine (1) mit einem Stator (2) nach einem der vorhergehenden Ansprüche, **dadurch gekennzeichnet, dass** die Kühlelemente (11) des Stators (2) axial über den Wickelkopf eines Wicklungssystems (7) geführt sind.

6. Dynamoelektrische Maschine (1) nach Anspruch 5, **dadurch gekennzeichnet , dass** die Kühlelemente (11) an einen in-, an- oder außerhalb der dynamoelektrischen Maschine (1) befindlichen Wärmetauscher (13) angeschlossen sind.
